# EUROPEAN PATENT APPLICATION

(11) **EP 4 794 018 A1**
(43) Date of publication of application: **19.08.2026**
(21) Application number: 24877082.8
(22) Date of filing: 02.10.2024
(51) Int. Cl.: H01M 4/139, C09C 1/48, C09C 1/54, C09D 17/00, H01M 4/62

(54) **SLURRY, POSITIVE ELECTRODE COMPOSITION, BATTERY, AND METHOD FOR PRODUCING SLURRY**

(30) Priority: 12.10.2023 JP 2023176778
(71) Applicant: Denka Company Limited, Tokyo 103-8338 (JP)
(72) Inventor: HIDAKA Masatomo, Tokyo 103-8338 (JP); KAWASAKI Tokiya, Tokyo 103-8338 (JP)
(74) Representative: Hoffmann Eitle
(86) International application number: PCT/JP2024/035319
(87) International publication number: WO 2025/079484

(57) **Abstract**

A slurry containing carbon black, a dispersant, and a dispersion medium, wherein, in a volume-based particle size distribution of the carbon black, a median diameter (D50) is at least 0.5 µm and at most 0.8 µm, a difference (D90 - D10) between a cumulative 90% diameter (D90) and a cumulative 10% diameter (D10) is less than 2 µm, and a total amount of particles having a particle diameter larger than 5 µm is less than 1%, and a ratio (D50'/D50) of a median diameter (D50') of the carbon black when the slurry has been placed at rest for 4 weeks to D50 is less than 1.3.

## Description

### TECHNICAL FIELD

The present disclosure relates to a slurry, a positive electrode composition, a battery, and a slurry production method.

### BACKGROUND

Due to increases in environmental and energy issues, technologies for realizing a low-carbon society in order to reduce dependence on fossil fuels are being actively developed. Such technological development is occurring in diverse fields, including development of low-pollution vehicles such as hybrid electric vehicles and electric vehicles, development of natural-energy power generation and power storage systems such as those for solar power generation and wind power generation, development of next-generation power grids that efficiently supply electric power and reduce power transmission loss, etc.

One key device that is commonly necessary for all of these technologies is the battery, and high energy density for downsizing systems is sought in such batteries. Additionally, high output power properties are sought for allowing electric power to be stably supplied without being affected by the environmental temperature during use. Furthermore, good cycling properties, etc. allowing long-term use to be endured are also sought. For this reason, the replacement of conventional lead storage batteries, nickel-cadmium batteries, and nickel-hydrogen batteries with lithium ion secondary batteries, which have higher energy densities, output power properties, and cycling properties is rapidly progressing.

Conventionally, the positive electrodes of lithium ion secondary batteries are produced by coating a current collector with a positive electrode paste containing a positive electrode active material, a conductive material, and a binding material (also known as a binder). As such positive electrode active materials, lithium-containing composite oxides such as lithium cobalt oxide and lithium manganese oxide have been used. Additionally, since positive electrode active materials have poor conductivity, conductive materials such as carbon black have been added to positive electrode pastes for the purpose of imparting conductivity (for example, Patent Document 1).

### CITATION LIST

### PATENT LITERATURE

Patent Document 1: JP 2008-227481 A

### SUMMARY OF INVENTION

### TECHNICAL PROBLEM

In recent years, further performance improvements in batteries have been sought.

One objective of the present disclosure is to provide a slurry that is useful for producing a battery having excellent cycling properties, and a production method for the slurry. Additionally, one objective of the present disclosure is to provide a positive electrode composition that is useful for producing a battery having excellent cycling properties, and a production method for the positive electrode composition. Furthermore, one objective of the present disclosure is to provide a battery having excellent cycling properties, and a production method for the battery.

### SOLUTION TO PROBLEM

The present invention, for example, relates to [1]-[13] below.
[1] A slurry containing carbon black, a dispersant, and a dispersion medium, wherein:
   in a volume-based particle size distribution of the carbon black, a median diameter (D50) is at least 0.5 µm and at most 0.8 µm, a difference (D90 - D10) between a cumulative 90% diameter (D90) and a cumulative 10% diameter (D10) is less than 2 µm, and a total amount of particles having a particle diameter larger than 5 µm is less than 1%; and
   a ratio (D50'/D50) of a median diameter (D50') of the carbon black when the slurry has been placed at rest for 4 weeks to D50 is less than 1.3.
[2] The slurry according to [1], wherein the carbon black is acetylene black.
[3] The slurry according to [1] or [2], wherein an average primary particle diameter of the carbon black is at least 17 nm and at most 30 nm.
[4] The slurry according to any one of [1] to [3], wherein the median diameter (D50') is at least 0.5 µm and at most 0.8 µm.
[5] The slurry according to any one of [1] to [4], wherein, in a volume-based particle size distribution of the carbon black when the slurry has been placed at rest for 4 weeks, a difference (D90' - D10') between a cumulative 90% diameter (D90') and a cumulative 10% diameter (D10') is less than 2 µm.
[6] A positive electrode composition that is a mixture of the slurry according to any one of [1] to [5], an active material, and a binding material.
[7] A battery provided with a positive electrode including a current collector and a mixed material layer, wherein
   the mixed material layer contains a solid component of the positive electrode composition according to [6].
[8] A slurry production method including:
   a mixing step of mixing a carbon black powder, a dispersant, and a dispersion medium to obtain a first slurry; and
   a dispersion step of performing a dispersion treatment on the first slurry to obtain a second slurry containing carbon black, the dispersant, and the dispersion medium;
   wherein
   the dispersion step is a step of performing the dispersion treatment so that
   in a volume-based particle size distribution of the carbon black in the second slurry, a median diameter (D50) is at least 0.5 µm and at most 0.8 µm, a difference (D90 - D10) between a cumulative 90% diameter (D90) and a cumulative 10% diameter (D10) is less than 2 µm, and a total amount of particles having a particle diameter larger than 5 µm is less than 1%; and
   a ratio (D50'/D50) of the median diameter (D50') of the carbon black when the second slurry has been placed at rest for 4 weeks to D50 is less than 1.3.
[9] The production method according to [8], wherein the carbon black is acetylene black.
[10] The production method according to [8] or [9], wherein a BET specific surface area of the carbon black powder is at least 100 m²/g and at most 400 m²/g.
[11] The production method according to any one of [8] to [10], wherein an average primary particle diameter of the carbon black is at least 17 nm and at most 30 nm.
[12] The production method according to any one of [8] to [11], wherein the dispersion step is a step of further performing the dispersion treatment after the median diameter (D50) has become at least 0.5 µm and at most 0.9 µm in the volume-based particle size distribution of the carbon black in the slurry.
[13] The production method according to any one of [8] to [12], wherein the dispersion step is a step, after the median diameter (D50) has become at least 0.5 µm and at most 0.9 µm in the volume-based particle size distribution of the carbon black in the slurry, of further performing the dispersion treatment for a time period that is 0.5 to 2.5 times a dispersion time until the median diameter (D50) became at least 0.5 µm and at most 0.9 µm.

### EFFECTS OF INVENTION

According to the present disclosure, a slurry that is useful for producing a battery having excellent cycling properties, and a production method for the slurry are provided. Additionally, according to the present disclosure, a positive electrode composition that is useful for producing a battery having excellent cycling properties, and a production method for the positive electrode composition are provided. Furthermore, one objective of the present disclosure is to provide a battery having excellent cycling properties, and a production method for the battery.

### DESCRIPTION OF EMBODIMENTS

Hereinafter, preferred embodiments of the present invention will be explained in detail.

A slurry of the present embodiment contains carbon black, a dispersant, and a dispersion medium.

In a volume-based particle size distribution of the carbon black, the median diameter (D50) is at least 0.5 µm and at most 0.8 µm, and the difference (D90 - D10) between the cumulative 90% diameter (D90) and the cumulative 10% diameter (D10) is less than 2 µm. Additionally, in the volume-based particle size distribution of the carbon black, the total amount of particles having a particle diameter larger than 5 µm is less than 1% of the total amount of the carbon black. Additionally, when the median diameter in the volume-based particle size distribution of the carbon black when the slurry has been placed at rest for 4 weeks is defined as D50', the ratio (D50'/D50) of D50' to D50 above is less than 1.3.

The slurry of the present embodiment can be favorably used in a composition (positive electrode composition) for forming a positive electrode, and by using a positive electrode formed by using the slurry of the present embodiment, a battery with excellent cycling properties is realized.

According to the present inventors, a battery with excellent cycling properties is thought to be realized because, by dispersing the carbon black in the dispersion medium so that D50, the difference (D90 - D10), the total amount of particles having a particle diameter larger than 5 µm, and the ratio (D50'/D50) are within the above-mentioned ranges, the carbon black in the slurry is put in a dispersion state that is effective for forming a mixed material layer for positive electrodes.

More specifically, when forming an electrode, the structure of the carbon black is thought to affect the conductivity, and when the structure is developed, conduction pathways tend to efficiently form inside the electrode. On the other hand, since the structure develops in a complicated and entangled form, if the structure is excessively formed, the slurry viscosity becomes high and uniform dispersion of the carbon black tends to become difficult. Additionally, in the slurry of the present embodiment, the carbon black is dispersed in a dispersion state that is effective for forming mixed material layers for positive electrodes, and the favorable dispersion state is maintained for a long period of time due to a contribution by the dispersant. The above-mentioned effects are thought to be obtained as a result thereof.

In this case, according to the knowledge of the present inventors, even when performing a dispersion treatment by which the carbon black is well dispersed (such that D50, the difference (D90 - D10), and the total amount of particles with a particle diameter larger than 5 µm are within the above-mentioned ranges), there were cases in which the dispersion state was not maintained and aggregation occurred in the rest state. In this case, sufficient cycling properties cannot be obtained.

The present inventors discovered that excellent cycling properties can be realized by continuing the dispersion treatment without stopping the dispersion treatment even when the carbon black is sufficiently dispersed (such that D50, the difference (D90 - D10), and the total amount of particles with a particle diameter larger than 5 µm are within the above-mentioned ranges), thereby putting the ratio (D50'/D50) in the above-mentioned range. The reason such effects are obtained is thought to be because, by continuing the dispersion treatment, the dispersant is sufficiently disposed around the carbon black that has been dispersed in a favorable dispersion state, thereby suppressing aggregation of the carbon black.

### <Carbon black>

The carbon black may be carbon black that is generally used as a conductive material for batteries. The carbon black may be, for example, acetylene black, furnace black, channel black, etc. The carbon black is preferably acetylene black from the aspect that excellent battery properties can be easily obtained.

The average primary particle diameter of the carbon black may be, for example, 17 nm or more, or may be 18 nm or more. If the average primary particle diameter of the carbon black is large, better battery performance is thought to be more easily obtained by reducing the interactions between the dispersion medium and the conductive materials, and the interactions between the conductive materials, facilitating uniform mixing when mixed with an active material, and allowing strong conduction pathways to be more easily formed.

Additionally, the average primary particle diameter of the carbon black may be, for example, 30 nm or less, and may be 29 nm or less, 27 nm or less, 25 nm or less, 23 nm or less, or 21 nm or less. If the average primary particle diameter of the carbon black is small, better battery performance is thought to be more easily obtained because there are many electrical contact points between the active material and the conductive material in the mixed material layer, improving the conductivity. That is, the average primary particle diameter of the carbon black may be, for example, 17 to 30 nm, 17 to 29 nm, 17 to 27 nm, 17 to 25 nm, 17 to 23 nm, 17 to 21 nm, 18 to 30 nm, 18 to 29 nm, 18 to 27 nm, 18 to 25 nm, 18 to 23 nm, or 18 to 21 nm.

The average primary particle diameter of the carbon black refers to the average value of the circle-equivalent diameter measured based on images when the carbon black is observed with a transmission electron microscope (TEM). Specifically, the average primary particle diameter is obtained by using a transmission electron microscope JEM-2000FX (manufactured by JEOL Ltd.) to capture 10 images of the carbon black at 100,000-times magnification, using image analysis to measure the circle-equivalent diameters of 200 primary particles of the carbon black randomly extracted from the obtained images, and taking the arithmetic mean thereof.

The crystallite size (Lc) of the carbon black may be, for example, 15 Å or more, or may be 16 Å or more. When the crystallite size (Lc) of the carbon black is large, better battery properties are thought to be more easily obtainable because π electrons become more easily movable in the crystal layer and conduction pathways for carrying electrons that have flowed from the current collector to the active material are more easily formed.

Additionally, the crystallite size (Lc) of the carbon black may be, for example, 30 Å or less, and may be 28 Å or less, 26 Å or less, 24 Å or less, 22 Å or less, 20 Å or less, or 18 Å or less. If the crystallite size (Lc) of the carbon black is small, better battery properties are thought to be more easily obtainable because the particle shapes of the primary particles of carbon black tend to become rounder, thereby reducing the interactions between the particles, allowing the carbon black to more easily mix uniformly with the active material, and allowing conduction pathways to more easily form. That is, the crystallite sizes (Lc) of the carbon black may be, for example, 15 to 30 Å, 15 to 28 Å, 15 to 26 Å, 15 to 24 Å, 15 to 22 Å, 15 to 20 Å, 15 to 18 Å, 16 to 30 Å, 16 to 28 Å, 16 to 26 Å, 16 to 24 Å, 16 to 22 Å, 16 to 20 Å, or 16 to 18 Å.

The crystallite size (Lc) of the carbon black is measured in accordance with JIS R7651. The crystallite size (Lc) of the carbon black refers to the crystallite size in the c-axis direction of the carbon black crystal layer.

The BET specific surface area of the carbon black may be, for example, 100 m²/g or more, 120 m²/g or more, 140 m²/g or more, 160 m²/g or more, or 180 m²/g or more. If the BET specific surface area of the carbon black is large, better battery properties are thought to be more easily obtainable because there are many electrical contact points between the active material and the conductive material, improving the conductivity.

Additionally, the BET specific surface area of the carbon black may be, for example, 500 m²/g or less, and may be 450 m²/g or less, 400 m²/g or less, or 350 m²/g or less. When the BET specific surface area of the carbon black is small, better battery performance is thought to be more easily obtained by reducing the interactions between the dispersion medium and the conductive materials, and the interactions between the conductive materials, facilitating uniform mixing when mixed with an active material, and allowing strong conduction pathways to be more easily formed. That is, the BET specific surface area of the carbon black may be, for example, 100 to 500 m²/g, 100 to 450 m²/g, 100 to 400 m²/g, 100 to 350 m²/g, 120 to 500 m²/g, 120 to 450 m²/g, 120 to 400 m²/g, 120 to 350 m²/g, 140 to 500 m²/g, 140 to 450 m²/g, 140 to 400 m²/g, 140 to 350 m²/g, 160 to 500 m²/g, 160 to 450 m²/g, 160 to 400 m²/g, 160 to 350 m²/g, 180 to 500 m²/g, 180 to 450 m²/g, 180 to 400 m²/g, or 180 to 350 m²/g.

The BET specific surface area of the carbon black can be measured by a static capacity method in accordance with JIS Z8830, using nitrogen as an adsorbate.

The volume resistivity of the carbon black may be 0.30 Ω·cm or less, or 0.25 Ω·cm or less from the aspect of obtaining excellent conductivity. The volume resistivity of the carbon black is measured, for example, in a state of compression with a load of 7.5 MPa.

The ash content and the water content in the carbon black are not particularly limited. The ash content in the carbon black may be, for example, 0.04% by mass or less, and the water content in the carbon black may be, for example, 0.10% by mass or less.

The production method of the carbon black is not particularly limited. The carbon black may, for example, be produced by a production method that includes a synthesis step for obtaining carbon black by treating a raw material gas including a hydrocarbon in a cylindrical cracking furnace.

In the synthesis step, the raw material gas is preferably processed in a cylindrical cracking furnace. The cylindrical cracking furnace may, for example, be provided with a pyrolysis portion that performs a pyrolysis reaction on the hydrocarbon, and a maturation portion that modifies the pyrolysis reaction product. The cylindrical cracking furnace may further be provided with a supply port for supplying the raw material gas to the pyrolysis portion, and a recovery port for recovering the generated carbon black from the maturation portion.

The supplied raw material gas is preferably retained in the pyrolysis portion for 30 to 150 seconds at a temperature of 1900 °C or higher.

The pyrolysis reaction product supplied from the pyrolysis portion is preferably retained in the maturation portion for 20 to 90 seconds at a temperature of 1700 °C or higher.

In the present embodiment, the raw material gas preferably includes acetylene as a carbon source. The carbon source (for example, acetylene) content in the raw material gas may be, for example, 10 vol% or more, and is preferably 20 vol% or more, more preferably 30 vol% or more, and may be 100 vol%. The content of each component in the raw material gas is indicated as a percentage by volume with respect to the volume at 100 °C and 1 atm.

The raw material gas may further include hydrocarbons other than the carbon source (for example, acetylene). Examples of other hydrocarbons include, for example, methane, ethane, propane, ethylene, propylene, butadiene, benzene, toluene, xylene, gasoline, kerosene, light oil, heavy oil, etc. By adding these other hydrocarbons, the reaction temperature can be changed to increase or decrease the specific surface area of the carbon black. The other hydrocarbons are preferably selected from the group consisting of aromatic hydrocarbons such as benzene and toluene, and unsaturated hydrocarbons such as ethylene and propylene.

If the raw material gas contains acetylene and another hydrocarbon, the content of the other hydrocarbon is, for example, 0.1 to 99 parts by volume, preferably 0.2 to 50 parts by volume, and more preferably 0.3 to 30 parts by volume with respect to 100 parts by volume of acetylene.

The raw material gas may further include water vapor gas, oxygen gas, hydrogen gas, carbon dioxide gas, etc.

The water vapor gas content may be, for example, 0 to 80 parts by volume, preferably 0.1 to 70 parts by volume, more preferably 1 to 60 parts by volume, and even more preferably 3 to 55 parts by volume with respect to 100 parts by volume of the carbon source (for example, acetylene) in the raw material gas. If the water vapor gas content is within the above-mentioned range, the BET specific surface area of the carbon black tends to be larger.

The oxygen gas injection amount is not particularly restricted if the carbon black production yield is not to be considered. The carbon black can be produced even when injecting more oxygen gas than is needed. The oxygen gas injection amount may be, for example, 0 to 300 parts by volume, 0 to 250 parts by volume, 0 to 220 parts by volume, or 0 to 200 parts by volume, and is preferably 0.1 to 190 parts by volume, more preferably 0.5 to 180 parts by volume, and even more preferably 1 to 160 parts by volume with respect to 100 parts by volume of the carbon source (for example, acetylene) in the raw material gas. If the oxygen gas injection amount becomes large, the BET specific surface area of the carbon black tends to become larger, and if the oxygen gas injection amount becomes small, the average primary particle diameter of the carbon black tends to become larger.

In the synthesis step, the average primary particle diameter, the BET specific surface area, and the crystallite size (Lc) of the obtained carbon black can be adjusted by adjusting, for example, the addition rate of hydrocarbons other than acetylene, the injected oxygen gas amount, etc.

The carbon black content in the slurry may be, for example, 1 mass% or more, 3 mass% or more, 5 mass% or more, or 7 mass% or more. If the carbon black content is high, a positive electrode composition with a high active material concentration can be easily prepared. Additionally, the carbon black content in the slurry may be, for example, 30 mass% or less, 25 mass% or less, 20 mass% or less, or 15 mass% or less. If the carbon black content is low, a positive electrode composition with low viscosity can be easily prepared. If the viscosity of the positive electrode composition is low, an electrode that is uniform can be easily obtained when the positive electrode composition is applied. That is, the carbon black content in the slurry may be, for example, 1 to 30 mass%, 1 to 25 mass%, 1 to 20 mass%, 1 to 15 mass%, 3 to 30 mass%, 3 to 25 mass%, 3 to 20 mass%, 3 to 15 mass%, 5 to 30 mass%, 5 to 25 mass%, 5 to 20 mass%, 5 to 15 mass%, 7 to 30 mass%, 7 to 25 mass%, 7 to 20 mass%, or 7 to 15 mass%.

### <Dispersion medium>

The dispersion medium need only be a dispersion medium in which carbon black can be dispersed. Dispersion media include, for example, water, N-methyl-2-pyrrolidone, cyclohexane, methyl ethyl ketone, methyl isobutyl ketone, etc., among which N-methyl-2-pyrrolidone is preferable from the aspect of dispersibility of the carbon black. In the present specification, N-methyl-2-pyrrolidone will sometimes be abbreviated to "NMP".

### <Dispersant>

The dispersant need only be a component having the function of aiding the dispersion of carbon black in the dispersion medium. The dispersant may also be called a dispersant for dispersing the carbon black in the dispersion medium, a carbon black dispersant, etc.

Dispersants include, for example, polymeric dispersants, low-molecular-weight dispersants, etc., among which polymeric dispersants are preferable from the aspect that a slurry in which the various parameters discussed above are within the above-mentioned ranges can be easily obtained.

The polymeric dispersant may be a polymer that functions as a dispersant. Polymeric dispersants include, for example, vinyl polymers having polar groups, carboxymethyl cellulose and salts thereof, etc. Polymeric dispersants having polar groups are preferable from the aspect of having high affinity to both carbon black and dispersion media such as NMP, and excelling in terms of functioning as dispersants.

Polar groups include, for example, hydroxy groups, acetyl groups, amino groups, amido groups, acetal groups, oxycarbonyl groups, nitrile groups, etc. The vinyl polymers preferably have at least one type of polar group selected from the group consisting of hydroxy groups, acetal groups, amino groups, and oxycarbonyl groups, among which they preferably have hydroxy groups. Hydroxy groups are preferable from the aspects of having excellent withstand voltage and not tending to decompose even with repeated charging and discharging.

Vinyl polymers having polar groups include, for example, polyvinyl alcohol, polyvinyl acetal (for example, polyvinyl butyral, polyvinyl formal, etc.), polyvinyl pyrrolidone, polyvinyl amine, polyvinyl acetate, polyacrylonitrile, etc. Among the above, polyvinyl alcohol and polyvinyl pyrrolidone are preferable from the aspects of dissolubility in NMP and high adsorptivity to carbon black, and polyvinyl alcohol is particularly preferable from the aspect of having hydroxy groups, which have excellent withstand voltage and tend not to decompose even with repeated charging and discharging.

The dispersant content in the slurry may be, for example, 1 part by mass or more, and may be 3 parts by mass or more, 5 parts by mass or more, or 7 parts by mass or more with respect to 100 parts by mass of carbon black. Additionally, the dispersant content in the slurry may be, for example, 30 parts by mass or less, and may be, for example, 25 parts by mass or less, 20 parts by mass or less, or 15 parts by mass or less with respect to 100 parts by mass of carbon black. With such a content, the above-mentioned effects are more prominently exhibited. That is, the dispersant content in the slurry may be, for example, 1 to 30 parts by mass, 1 to 25 parts by mass, 1 to 20 parts by mass, 1 to 15 parts by mass, 3 to 30 parts by mass, 3 to 25 parts by mass, 3 to 20 parts by mass, 3 to 15 parts by mass, 5 to 30 parts by mass, 5 to 25 parts by mass, 5 to 20 parts by mass, 5 to 15 parts by mass, 7 to 30 parts by mass, 7 to 25 parts by mass, 7 to 20 parts by mass, or 7 to 15 parts by mass with respect to 100 parts by mass of carbon black.

### <Particle size distribution>

The volume-based particle size distribution of the carbon black in the slurry is measured by a laser diffraction/scattering method. Specifically, it is measured under the conditions below.
· Measuring equipment: Laser diffraction/scattering-type particle size distribution measurement device (Model Microtrac MT3300EX II, manufactured by MicrotracBEL Corp.)
· Measurement conditions: Measurement range/0.02 to 2000 µm; particle transmission properties/absorption; particle shape/non-spherical; solvent/NMP; circulation output/5 · Sample loading amount: Slurry was added and adjusted so that the transmission rate (TR) displayed when the sample was loaded became 0.85 to 0.9.

In the present specification, D10 refers to the particle diameter (µm) with a cumulative value of 10% (cumulative 10% diameter) in the above-mentioned particle size distribution, D50 refers to the particle diameter (µm) with a cumulative value of 50% (cumulative 50% diameter) in the above-mentioned particle size distribution, and D90 refers to the particle diameter (µm) with a cumulative value of 90% (cumulative 90% diameter) in the above-mentioned particle size distribution.

In the particle size distribution mentioned above, D50 is at least 0.5 µm and at most 0.8 µm. D50 may be at least 0.5 µm and at most 0.7 µm.

In the above-mentioned particle size distribution, the difference (D90 - D10) between D90 and D10 is less than 2 µm. The difference (D90 - D10) may be 1.9 µm or less, 1.8 µm or less, or 1.7 µm or less. Additionally, the difference (D90 - D10) may be, for example, 0.5 µm or more, 0.7 µm or more, 0.9 µm or more, or 1 µm or more. That is, the difference (D90 - D10) may be, for example, at least 0.5 µm and less than 2 µm, 0.5 to 1.9 µm, 0.5 to 1.8 µm, 0.5 to 1.7 µm, at least 0.7 µm and less than 2 µm, 0.7 to 1.9 µm, 0.7 to 1.8 µm, 0.7 to 1.7 µm, at least 0.9 µm and less than 2 µm, 0.9 to 1.9 µm, 0.9 to 1.8 µm, 0.9 to 1.7 µm, at least 1 µm and less than 2 µm, 1 to 1.9 µm, 1 to 1.8 µm, or 1 to 1.7 µm.

In the above-mentioned particle size distribution, the total amount of particles with a particle size larger than 5 µm (hereinafter also referred to as coarse particles) constitutes less than 1% of the total amount of the carbon black. The total amount of the coarse particles may be 0.8% or less, 0.6% or less, or 0.4% or less. The total amount of the coarse particles may be 0%.

The volume-based particle size distribution of the carbon black when the slurry has been placed at rest for 4 weeks (hereinafter, the particle size distribution after 4-weeks' rest) is measured by the same method as that described above, using a slurry after 4-weeks' rest. The slurry is placed at rest in a hermetically sealed state at 25 °C.

In the present specification, D10' refers to the particle diameter (µm) with a cumulative value of 10% (cumulative 10% diameter) in the above-mentioned particle size distribution after 4-weeks' rest, D50' refers to the particle diameter (µm) with a cumulative value of 50% (cumulative 50% diameter) in the above-mentioned particle size distribution after 4-weeks' rest, and D90' refers to the particle diameter (µm) with a cumulative value of 90% (cumulative 90% diameter) in the above-mentioned particle size distribution after 4-weeks' rest.

The ratio (D50'/D50) of D50' to D50 is less than 1.3. The ratio (D50'/D50) may be 1.25 or less, or 1.2 or less. The ratio (D50'/D50) may be 1 or more.

D50' may be, for example, at least 0.5 µm and at most 0.8 µm.

The difference (D90' - D10') between D90' and D10' may be, for example, less than 2 µm.

### <Other components>

The slurry of the present embodiment may further contain other components aside from the carbon black, the dispersant, and the dispersion medium. The other components include, for example, carbon nanotubes, graphite, graphene, binding materials, dispersion stabilizers, defoaming agents, etc.

The content of the other components in the slurry of the present embodiment may be, for example, 10 mass% or less, may be 5 mass% or less, 3 mass% or less, 1 mass% or less, 0.5 mass% or less, or 0.1 mass% or less, and may be 0 mass%.

### <Slurry production method>

The slurry of the present embodiment may be obtained by mixing a carbon black powder (powdered carbon black) with a dispersion medium so that D50, the difference (D90 - D10), the total amount of particles having a particle diameter larger than 5 µm, and the ratio (D50'/D50) are within the above-mentioned ranges.

The slurry of the present embodiment is produced, for example, by the production method below.

The slurry production method of the present embodiment may include a mixing step of mixing a carbon black powder, a dispersant, and a dispersion medium to obtain a first slurry; and a dispersion step of performing a dispersion treatment on the first slurry to obtain a second slurry (the slurry of the present embodiment) containing carbon black, the dispersant, and the dispersion medium. The dispersion step may be a step of performing the dispersion treatment so that D50, the difference (D90 - D10), the total amount of particles having a particle diameter larger than 5 µm, and the ratio (D50'/D50) in the second slurry are within the above-mentioned ranges.

In the mixing step, a carbon black powder, a dispersant, and a dispersion medium are mixed to obtain a first slurry. The mixing step need only involve mixing the respective components to a degree that the carbon black is uniformly distributed in the dispersion medium. That is, the mixing step may be a step of mixing the carbon black powder, the dispersant, and the dispersion medium until they are in slurry form.

The mixing method in the mixing step is not particularly limited, and may be a known method (for example, stirred mixing by means of a planetary mixer, a dispersion mixer, a drum mixer, a planetary centrifugal mixer, etc.).

In the dispersion step, a dispersion treatment is performed on the first slurry to disperse the carbon black in the slurry so that D50, the difference (D90 - D10), the total amount of particles having a particle diameter larger than 5 µm, and the ratio (D50'/D50) are within the above-mentioned ranges.

The dispersion method in the dispersion step is not particularly limited, and may be a known method (for example, a dispersion treatment by means of a bead mill, a ball mill, a colloid mill, a high-pressure homogenizer, etc.).

The dispersion step may, for example, be a step of continuing the dispersion treatment even when D50, the difference (D90 - D10), and the total amount of particles having a particle diameter larger than 5 µm are within the above-mentioned ranges, and until the ratio (D50'/D50) is within the above-mentioned ranges.

The dispersion step may be a step of further performing the dispersion treatment after the median diameter (D50) has become at least 0.5 µm and at most 0.9 µm in the volume-based particle size distribution of the carbon black in the slurry, thereby obtaining the second slurry.

Additionally, the dispersion step may, for example, be a step, after the median diameter (D50) has become at least 0.5 µm and at most 0.9 µm in the volume-based particle size distribution of the carbon black in the slurry, of further performing the dispersion treatment for a time period that is 0.5 to 2.5 times the dispersion time until the median diameter (D50) became at least 0.5 µm and at most 0.9 µm.

### <Positive electrode composition>

The positive electrode composition is a mixture of the slurry of the present embodiment, an active material, and a binding material.

A positive electrode is formed by applying the positive electrode composition to a current collector and drying the positive electrode composition to form a mixed material layer on the current collector. That is, the positive electrode composition can also be considered to be a positive electrode-forming coating liquid or a mixed material layer-forming coating liquid.

The active material (positive electrode active material) is not particularly limited and need only be a material that can reversibly store and release cations. The active material may be, for example, a lithium-containing polyanion compound or a lithium-containing composite oxide containing manganese having a volume resistivity of 1 × 10⁴ Ω·cm or higher. Lithium-containing composite oxides containing manganese include, for example, lithium manganese oxides such as LiMnO₂, LiMnO₃, LiMn₂O₃, and Li₁₊ₓMn₂₋ₓO₄ (provided that x = 0 to 0.33); and composite oxides containing one or more types of transition metal elements such as LiMnₓNi_{y}CO_{z}O₂ (provided that x + y + z = 1, 0 ≤ y < 1, 0 ≤ z <1, and 0 ≤ x < 1), Li₁₊ₓMn_{2-x-y}M_{y}O₄ (provided that x = 0 to 0.33, y = 0 to 1.0, and 2 - x - y > 0), LiMn₂₋ₓMₓO₂ (provided that x = 0.01 to 0.1), and Li₂Mn₃MO₈. Lithium-containing polyanionic compounds include polyanionic compounds such as LiFePO₄, LiMnPO₄, and Li₂MPO₄F (provided that M is a metal of at least one type selected from among Co, Ni, Fe, Cr, and Zn). The M in each composition is of at least one type selected from the group consisting of Fe, Co, Ni, Al, Cu, Mg, Cr, Zn, and Ta.

Binding materials include, for example, polyvinylidene fluoride, polytetrafluoroethylene, styrene-butadiene copolymers, (meth)acrylic acid ester copolymers, etc. The polymer structure of the binding material may be, for example, that of a random copolymer, a cross-copolymer, a graft copolymer, a block copolymer, etc. The binding material is preferably polyvinylidene fluoride from the aspect of having excellent withstand voltage.

The carbon black content in the positive electrode composition may be, for example, 0.01 mass% or more, and may be 0.04 mass% or more, 0.07 mass% or more, or 0.1 mass% or more with respect to the total amount of the solid components in the positive electrode composition. Additionally, the carbon black content in the positive electrode composition may be, for example, 8 mass% or less, and may be 7 mass% or less, 6 mass% or less, or 5 mass% or less with respect to the total amount of the solid components in the positive electrode composition. That is, the carbon black content in the positive electrode composition may be, for example, 0.01 to 8 mass%, 0.01 to 7 mass%, 0.01 to 6 mass%, 0.01 to 5 mass, 0.04 to 8 mass%, 0.04 to 7 mass%, 0.04 to 6 mass%, 0.04 to 5 mass, 0.07 to 8 mass%, 0.07 to 7 mass%, 0.07 to 6 mass%, 0.07 to 5 mass, 0.1 to 8 mass%, 0.1 to 7 mass%, 0.1 to 6 mass%, or 0.1 to 5 mass with respect to the total amount of the solid components in the positive electrode composition.

The binding material content in the positive electrode composition may be, for example, 0.01 mass% or more, and may be 0.02 mass% or more, 0.03 mass% or more, 0.04 mass% or more, or 0.05 mass% or more with respect to the total amount of the solid components in the positive electrode composition. Additionally, the binding material content in the positive electrode composition may be, for example, 10 mass% or less, and may be 8 mass% or less, 6 mass% or less, or 4 mass% or less with respect to the total amount of the solid components in the positive electrode composition. That is, the binding material content in the positive electrode composition may be, for example, 0.01 to 10 mass%, 0.01 to 8 mass%, 0.01 to 6 mass%, 0.01 to 4 mass%, 0.02 to 10 mass%, 0.02 to 8 mass%, 0.02 to 6 mass%, 0.02 to 4 mass%, 0.03 to 10 mass%, 0.03 to 8 mass%, 0.03 to 6 mass%, 0.03 to 4 mass%, 0.04 to 10 mass%, 0.04 to 8 mass%, 0.04 to 6 mass%, 0.04 to 4 mass%, 0.05 to 10 mass%, 0.05 to 8 mass%, 0.05 to 6 mass%, or 0.05 to 4 mass% with respect to the total amount of the solid components in the positive electrode composition.

The active material content in the positive electrode composition may be, for example, 70 mass% or more, and may be 75 mass% or more, or 80 mass% or more with respect to the total amount of the solid components in the positive electrode composition. Additionally, the active material content in the positive electrode composition may be, for example, 99 mass% or less, and may be 98.9 mass% or less, or 98.8 mass% or less with respect to the total amount of the solid components in the positive electrode composition. That is, the active material content in the positive electrode composition may be, for example, 70 to 99 mass%, 70 to 98.9 mass%, 70 to 98.8 mass%, 75 to 99 mass%, 75 to 98.9 mass%, 75 to 98.8 mass%, 80 to 99 mass%, 80 to 98.9 mass%, or 80 to 98.8 mass% with respect to the total amount of the solid components in the positive electrode composition.

The solid component concentration in the positive electrode composition is not particularly limited, and the solid component concentration may be such as to obtain a viscosity allowing a mixed material layer to be formed, i.e., a viscosity allowing the positive electrode composition to be coated onto the current collector. The solid component concentration of the positive electrode composition may be, for example, 40 mass% or more, and may be 50 mass% or more, 60 mass% or more, or 70 mass% or more. Additionally, the solid component concentration of the positive electrode composition may be, for example, 95 mass% or less, and may be 85 mass% or less, 80 mass% or less, or 75 mass% or less. The solid components in the positive electrode composition may be, for example, what remains after having removed the dispersion medium from the positive electrode composition, including the carbon black, the active material, the binding material, and the dispersant. That is, the solid component concentration of the positive electrode composition may be, for example, 40 to 95 mass%, 40 to 85 mass%, 40 to 80 mass%, 40 to 75 mass%, 50 to 95 mass%, 50 to 85 mass%, 50 to 80 mass%, 50 to 75 mass%, 60 to 95 mass%, 60 to 85 mass%, 60 to 80 mass%, 60 to 75 mass%, 70 to 95 mass%, 70 to 85 mass%, 70 to 80 mass%, or 70 to 75 mass%.

The positive electrode composition may be prepared, for example, by mixing the slurry of the present embodiment with a binding material-containing solution, then mixing the active material therein. Additionally, the dispersion medium can be added after mixing the active material to adjust the viscosity of the positive electrode composition.

The binding material-containing solution may contain the binding material and a solvent. Examples of the solvent are the same as the dispersion medium in the slurry of the present embodiment.

The solid component concentration in the binding material-containing solution is not particularly limited and may be, for example, 1 mass% or more, and may be 2 mass% or more, or 3 mass% or more. Additionally, the solid component concentration of the binding material-containing solution may be, for example, 15 mass% or less, and may be 13 mass% or less, or 10 mass% or less. That is, the solid component concentration in the binding material-containing solution may be, for example, 1 to 15 mass%, 1 to 13 mass%, 1 to 10 mass%, 2 to 15 mass%, 2 to 13 mass%, 2 to 10 mass%, 3 to 15 mass%, 3 to 13 mass%, or 3 to 10 mass%.

### <Positive electrode>

The positive electrode includes a current collector and a mixed material layer. The mixed material layer may be formed by applying and drying the above-mentioned positive electrode composition. That is, the mixed material layer may contain the solid components in the above-mentioned positive electrode composition.

The positive electrode may be produced by using the positive electrode composition to form a mixed material layer on a current collector. The mixed material layer can be formed, for example, by applying the positive electrode composition to the current collector to form a coating film, drying said coating film, and pressing, cutting, etc. the coating film as needed.

The current collector is not particularly limited, and known current collectors can be used without any particular restrictions. As the current collector, for example, a metal foil (metals such as gold, silver, copper, platinum, aluminum, iron, nickel, chromium, manganese, lead, tungsten, and titanium, and alloys containing one of these metals as the main component) can be used. Among the above, aluminum is preferably used for the positive electrode, and copper is preferably used for the negative electrode. Although current collectors are generally provided in the form of foils, there is no limitation thereto, and current collectors in the form of a foil with holes and in the form of a mesh can be used.

The method for applying the positive electrode composition to the current collector is not particularly limited, and for example, may be a method such as die coating, dip coating, roll coating, doctor coating, knife coating, spray coating, gravure coating, screen printing, and electrostatic coating.

The amount of the positive electrode composition to be applied is not particularly limited, and may be adjusted, as appropriate, such that the thickness of the mixed material layer is within a prescribed range.

The thickness of the mixed material layer is not particularly limited and may be, for example, 50 to 200 µm, or may be 50 to 100 µm.

The positive electrode can be favorably used as an electrode for a battery, particularly a secondary battery (for example, a lithium ion secondary battery).

### <Battery>

The battery is provided with the above-mentioned positive electrode. The procedure other than that for the positive electrode may be configured in the same manner as that used for known batteries.

The battery may be a secondary battery, and may be a lithium ion secondary battery.

The purpose of use of the battery is not particularly limited, and it can be used in a wide range of fields including, for example, portable audiovisual equipment such as digital cameras, video cameras, portable audio players, and portable liquid-crystal televisions; portable information terminals such as notebook-type personal computers, smartphones, and mobile PCs; as well as portable game equipment, electric power tools, electric bicycles, hybrid vehicles, electric vehicles, and power storage systems.

While preferable embodiments of the present disclosure have been explained above, the present disclosure is not limited to the above-described embodiments.

### EXAMPLES

Hereinafter, the present disclosure will be explained in further detail by means of examples. However, the present disclosure is not limited to these examples.

### <Example A-1>

### (Preparation of carbon black A)

Carbon black (carbon black A) having a BET specific surface area of 301 m²/g, an average primary particle diameter of 19 nm, and a crystallite size (Lc) of 16 Å was prepared.

### (Preparation of slurry)

Carbon black A was prepared, N-methyl-2-pyrrolidone (hereinafter also referred to as NMP) was prepared as a dispersion medium, and polyvinyl alcohol was prepared as a dispersant.

A slurry (a) was obtained by adding 1.0 mass% of polyvinyl alcohol and 10.0 mass% of carbon black A to 89.0 mass% of NMP, then stirring for 120 minutes with a planetary mixer (Hivis Disper Mix Model 3D-5, manufactured by Primix Corp.). The slurry (a) was loaded into a bead mill (Mugenflow MGF2-ZA, manufactured by Ashizawa Finetech Ltd.) loaded with zirconia beads (diameter 0.5 mm) and a dispersion treatment was performed for 30 minutes with the circumferential speed of the vessel set to 8 m/s. After the dispersion treatment was performed, the zirconia beads were removed by filtration to obtain a slurry A-1.

The particle size distribution of the carbon black in the obtained slurry A-1 was as indicated in Table 1. Additionally, the particle size distribution of the carbon black after having placed slurry A-1 at rest for 4 weeks was as indicated in Table 1.

### (Production and evaluation of battery)

### (i) Production of positive electrode

Lithium nickel manganese cobalt oxide ("ME6E", manufactured by Beijing Easpring Material Technology Co., Ltd.) having an average particle diameter (D50) of 10 µm was prepared as an active material, an NMP solution of polyvinylidene fluoride was prepared as a binding material, and NMP was prepared as a dispersion medium.

The above-mentioned slurry A-1 and the NMP solution of polyvinylidene fluoride were mixed using a planetary centrifugal mixer (Awatori Rentaro ARV-310, manufactured by Thinky Corp.) to obtain a mixed liquid. Next, the mixed liquid and the active material were mixed, NMP was added thereto until the viscosity became such that coating was possible, and the planetary centrifugal mixer was used until the mixture became uniform to obtain a positive electrode composition. The amounts of the respective raw materials were adjusted so that the active material was 97.7 mass%, the carbon black was 1.0 mass%, and the binding material was 1.3 mass% with respect to the total amount of solid components in the positive electrode composition.

Next, the positive electrode composition was used to form a film, with an applicator, on one surface of an aluminum foil (manufactured by UACJ Corp.) having a thickness of 15 µm to produce a laminate, and the laminate was placed at rest in a dryer and pre-dried for 1 hour at 105 °C to completely remove the NMP. Thereafter, the laminate was pressed and cut to obtain a positive electrode provided with a current collector and a mixed material layer.

### (ii) Production of negative electrode

Purified water (manufactured by Kanto Kagaku) was prepared as a solvent, artificial graphite ("MAG-D", manufactured by Hitachi Chemical Co., Ltd.) was prepared as a negative electrode active material, styrene butadiene rubber ("BM-400B", manufactured by Zeon Corp.; hereinafter referred to as SBR) was prepared as a binding material, carboxymethyl cellulose ("D2200", manufactured by Daicel Corp.; hereinafter referred to as CMC) was prepared as a dispersant, and carbon black ("Li-400", manufactured by Denka Co., Ltd.) was prepared as a conductive material. Next, 1 mass% of CMC, 1 mass% of carbon black, and 96 mass% of artificial graphite, with respect to the total amount of solid components in a coating liquid for forming a negative electrode, were weighed out and mixed, purified water was added to this mixture, and the result was mixed until uniform by using a planetary centrifugal mixer (Awatori Rentaro ARV-310, manufactured by Thinky Corp.), thereby obtaining a mixture. Next, 2 mass% of SBR, with respect to the total amount of the solid components in the coating liquid for forming a negative electrode, was weighed out and added to the obtained mixture, and the result was mixed until uniform by using the planetary centrifugal mixer (Awatori Rentaro ARV-310, manufactured by Thinky Corp.), thereby obtaining the coating liquid for forming a negative electrode. Next, the coating liquid for forming a negative electrode was used to form a film, with an applicator, on a copper foil (manufactured by UACJ Corp.) having a thickness of 10 µm to produce a laminate, and the laminate was placed at rest in a dryer and pre-dried for 1 hour at 60 °C. Next, the laminate was pressed with a line pressure of 50 kg/cm in a roll press, and prepared such that the thickness of the entire laminate was 60 µm. Next, the laminate was vacuum-dried for 3 hours at 120 °C to completely remove the residual moisture, thereby obtaining a negative electrode provided with a current collector and a mixed material layer.

### (iii) Production of battery

The positive electrode, a separator, and the negative electrode were stacked and layered, then packed and presealed with an aluminum lamination film, subsequently injected with an electrolyte solution, and subjected to battery formatting and vacuum sealing to obtain a lamination-type secondary battery.

### (iv) Evaluation of battery (evaluation of cycling properties)

The fabricated battery was charged with a fixed current and fixed voltage restricted to 4.3 V and 1 C at 25 °C, then discharged to 3.0 V with a fixed current of 1 C. The above-mentioned charge/discharge was repeated through 500 cycles, and the discharge capacity was measured in each cycle. As an index of the battery cycling properties, the capacity retention rate after 500 cycles relative to the capacity retention rate after 1 cycle was calculated as a cycle capacity retention rate. The results of calculation of the cycle capacity retention rate are shown in Tables 1 to 3.

### <Comparative Example X-1>

Slurry preparation, and battery production and evaluation were performed in the same manner as in Example A-1, except that the time of the dispersion treatment was changed from 30 minutes to 15 minutes. The results are shown in Table 1.

### <Comparative Example X-2>

Slurry preparation, and battery production and evaluation were performed in the same manner as in Example A-1, except that the time of the dispersion treatment was changed from 30 minutes to 60 minutes. The results are shown in Table 1.

### <Comparative Example X-3>

Slurry preparation, and battery production and evaluation were performed in the same manner as in Example A-1, except that the circumferential speed of the vessel was changed from 8 m/s to 12 m/s. The results are shown in Table 1.

### <Comparative Example X-4>

Slurry preparation, and battery production and evaluation were performed in the same manner as in Example A-1, except that the circumferential speed of the vessel was changed from 8 m/s to 6 m/s. The results are shown in Table 1.

### < Example A-2>

Slurry preparation, and battery production and evaluation were performed in the same manner as in Example A-1, except that the circumferential speed of the vessel was changed from 8 m/s to 6 m/s and the time of the dispersion treatment was changed from 30 minutes to 60 minutes. The results are shown in Table 1.

**[Table 1]**

| | | Ex. A-1 | Comp. Ex. X-1 | Comp. Ex. X-2 | Comp. Ex. X-3 | Comp. Ex. X-4 | Ex. A-2 |
|---|---|---|---|---|---|---|---|
| Dispersion conditions | Vessel circumferential speed (m/s) | 8 | 8 | 8 | 12 | 6 | 6 |
| | Treatment time (minutes) | 30 | 15 | 60 | 30 | 30 | 60 |
| Particle | D10 (µm) | 0.284 | 0.321 | 0.221 | 0.274 | 0.304 | 0.284 |
| size distribution | D50 (µm) | 0.634 | 0.836 | 0.341 | 0.556 | 0.686 | 0.634 |
| | D90 (µm) | 1.755 | 3.304 | 0.868 | 1.552 | 2.989 | 1.529 |
| | D90 - D10 (µm) | 1.471 | 2.983 | 0.647 | 1.278 | 2.685 | 1.245 |
| | Coarse particles (%) | 0.12 | 3.97 | 0 | 0 | 3.00 | 0 |
| After 4 weeks' rest | D10' (µm) | 0.346 | 0.413 | 0.231 | 0.371 | 0.372 | 0.343 |
| | D50' (µm) | 0.716 | 1.104 | 0.414 | 0.827 | 0.751 | 0.689 |
| | D90' (µm) | 1.794 | 3.471 | 1.263 | 1.958 | 3.484 | 1.817 |
| | D90' - D10' (µm) | 1.448 | 3.058 | 1.032 | 1.587 | 3.112 | 1.474 |
| | Coarse particles (%) | 0.15 | 4.95 | 0 | 0 | 3.27 | 0 |
| Ratio (D50'/D50) | | 1.13 | 1.32 | 1.21 | 1.49 | 1.09 | 1.09 |
| Cycling properties (%) | | 88.5 | 84.9 | 82.6 | 83.7 | 83.0 | 89.1 |

### <Example B-1>

### (Preparation of carbon black B)

Carbon black (carbon black B) having a BET specific surface area of 178 m²/g, an average primary particle diameter of 22 nm, and a crystallite size (Lc) of 17 Å was prepared.

### (Preparation of slurry)

A slurry was prepared in the same manner as in Example A-1, except that carbon black B was used instead of carbon black A, and the operation time was changed from 30 minutes to 20 minutes, thereby obtaining slurry B-1.

### (Production and evaluation of battery)

A battery was produced and evaluated in the same manner as in Example A-1, except that slurry B-1 was used, and the contained amounts of the respective components in the positive electrode composition were changed to 97.2 mass% of the active material, 1.5 mass% of the carbon black, and 1.3 mass% of the binding material with respect to the total amount of the solid components in the positive electrode composition. The results are shown in Table 2.

### <Comparative Example Y-1>

Slurry preparation, and battery production and evaluation were performed in the same manner as in Example B-1, except that the time of the dispersion treatment was changed from 20 minutes to 10 minutes. The results are shown in Table 2.

### <Comparative Example Y-2>

Slurry preparation, and battery production and evaluation were performed in the same manner as in Example B-1, except that the time of the dispersion treatment was changed from 20 minutes to 40 minutes. The results are shown in Table 2.

### <Comparative Example Y-3>

Slurry preparation, and battery production and evaluation were performed in the same manner as in Example B-1, except that the circumferential speed of the vessel was changed from 8 m/s to 12 m/s, and the time of the dispersion treatment was changed from 20 minutes to 5 minutes. The results are shown in Table 2.

### <Comparative Example Y-4>

Slurry preparation, and battery production and evaluation were performed in the same manner as in Example B-1, except that the circumferential speed of the vessel was changed from 8 m/s to 6 m/s. The results are shown in Table 2.

### < Example B-2>

Slurry preparation, and battery production and evaluation were performed in the same manner as in Example B-1, except that the circumferential speed of the vessel was changed from 8 m/s to 6 m/s and the time of the dispersion treatment was changed from 20 minutes to 50 minutes. The results are shown in Table 2.

**[Table 2]**

| | | Ex. B-1 | Comp. Ex. Y-1 | Comp. Ex. Y-2 | Comp. Ex. Y-3 | Comp. Ex. Y-4 | Ex. B-2 |
|---|---|---|---|---|---|---|---|
| Dispersion conditions | Vessel circumferential speed (m/s) | 8 | 8 | 8 | 12 | 6 | 6 |
| | Treatment time (minutes) | 20 | 10 | 40 | 5 | 20 | 50 |
| Particle size distribution | D10 (µm) | 0.316 | 0.338 | 0.210 | 0.275 | 0.405 | 0.301 |
| | D50 (µm) | 0.673 | 0.734 | 0.470 | 0.650 | 0.883 | 0.569 |
| | D90 (µm) | 2.009 | 3.376 | 1.649 | 2.539 | 2.339 | 1.658 |
| | D90 - D10 (µm) | 1.693 | 3.038 | 1.439 | 2.264 | 1.934 | 1.357 |
| | Coarse particles (%) | 0.17 | 4.74 | 0.60 | 2.83 | 0.83 | 0.14 |
| After 4 weeks' rest | D10' (µm) | 0.329 | 0.349 | 0.264 | 0.283 | 0.405 | 0.310 |
| | D50' (µm) | 0.700 | 0.765 | 0.619 | 0.663 | 0.909 | 0.612 |
| | D90' (µm) | 2.161 | 3.467 | 2.121 | 2.839 | 2.605 | 1.826 |
| | D90' - D10' (µm) | 1.832 | 3.118 | 1.857 | 2.556 | 2.200 | 1.516 |
| | Coarse particles (%) | 0.23 | 5.25 | 0.83 | 3.11 | 0.83 | 0.25 |
| Ratio (D50'/D50) | | 1.04 | 1.04 | 1.32 | 1.02 | 1.03 | 1.08 |
| Cycling properties (%) | | 86.7 | 83.5 | 82.1 | 82.5 | 83.5 | 86.0 |

### <Example C-1>

### (Preparation of carbon black C)

Carbon black (carbon black C) having a BET specific surface area of 133 m²/g, an average primary particle diameter of 26 nm, and a crystallite size (Lc) of 25 Å was prepared.

### (Preparation of slurry)

A slurry was prepared in the same manner as in Example A-1, except that carbon black C was used instead of carbon black A, and the operation time was changed from 30 minutes to 20 minutes, thereby obtaining slurry C-1.

### (Production and evaluation of battery)

A battery was produced and evaluated in the same manner as in Example A-1, except that slurry C-1 was used, and the contained amounts of the respective components in the positive electrode composition were changed to 96.7 mass% of the active material, 2.0 mass% of the carbon black, and 1.3 mass% of the binding material with respect to the total amount of the solid components in the positive electrode composition. The results are shown in Table 3.

### <Comparative Example Z-1>

Slurry preparation, and battery production and evaluation were performed in the same manner as in Example C-1, except that the time of the dispersion treatment was changed from 20 minutes to 10 minutes. The results are shown in Table 3.

### <Comparative Example Z-2>

Slurry preparation, and battery production and evaluation were performed in the same manner as in Example C-1, except that the time of the dispersion treatment was changed from 20 minutes to 40 minutes. The results are shown in Table 3.

### <Comparative Example Z-3>

Slurry preparation, and battery production and evaluation were performed in the same manner as in Example C-1, except that the circumferential speed of the vessel was changed from 8 m/s to 12 m/s, and the time of the dispersion treatment was changed from 20 minutes to 5 minutes. The results are shown in Table 3.

### <Comparative Example Z-4>

Slurry preparation, and battery production and evaluation were performed in the same manner as in Example C-1, except that the circumferential speed of the vessel was changed from 8 m/s to 6 m/s. The results are shown in Table 3.

### <Example C-2>

Slurry preparation, and battery production and evaluation were performed in the same manner as in Example C-1, except that the circumferential speed of the vessel was changed from 8 m/s to 6 m/s and the time of the dispersion treatment was changed from 20 minutes to 50 minutes. The results are shown in Table 3.

**[Table 3]**

| | | Ex. C-1 | Comp. Ex. Z-1 | Comp. Ex. Z-2 | Comp. Ex. Z-3 | Comp. Ex. Z-4 | Ex. C-2 |
|---|---|---|---|---|---|---|---|
| Dispersion conditions | Vessel circumferential speed (m/s) | 8 | 8 | 8 | 12 | 6 | 6 |
| | Treatment time (minutes) | 20 | 10 | 40 | 5 | 20 | 50 |
| Particle size distribution | D10 (µm) | 0.279 | 0.304 | 0.207 | 0.251 | 0.287 | 0.224 |
| | D50 (µm) | 0.581 | 0.675 | 0.428 | 0.554 | 0.575 | 0.549 |
| | D90 (µm) | 1.845 | 2.446 | 1.657 | 2.009 | 2.507 | 1.658 |
| | D90 - D10 (µm) | 1.566 | 2.142 | 1.450 | 1.758 | 2.220 | 1.434 |
| | Coarse particles (%) | 0.34 | 3.04 | 0.34 | 1.45 | 1.76 | 0.16 |
| After 4 weeks' rest | D10' (µm) | 0.290 | 0.326 | 0.285 | 0.261 | 0.285 | 0.295 |
| | D50' (µm) | 0.670 | 0.685 | 0.610 | 0.555 | 0.610 | 0.577 |
| | D90' (µm) | 2.235 | 2.884 | 2.565 | 2.255 | 3.001 | 1.746 |
| | D90' - D10' (µm) | 1.945 | 2.558 | 2.28 | 1.994 | 2.716 | 1.451 |
| | Coarse particles (%) | 0.45 | 3.06 | 0.68 | 1.58 | 2.12 | 0.18 |
| Ratio (D50'/D50) | | 1.15 | 1.01 | 1.43 | 1.00 | 1.06 | 1.05 |
| Cycling properties (%) | | 86.1 | 83.5 | 81.5 | 84.6 | 82.7 | 85.8 |

As described in Tables 1 to 3 above, in Comparative Example X-1, in a volume-based particle size distribution of the carbon black, the median diameter (D50) was larger than 0.8 µm, the difference (D90 - D10) between the cumulative 90% diameter (D90) and the cumulative 10% diameter (D10) was 2 µm or more, the total amount of particles with a particle diameter larger than 5 µm was 1% or more, and the ratio (D50'/D50) of the median diameter (D50') of the carbon black when the slurry was placed at rest for 4 weeks to D50 was 1.3 or more. In contrast therewith, in Example A-1, by performing a further dispersion treatment for a time period that was 0.5 to 2.5 times the dispersion time until the median diameter D50 became at least 0.5 µm and at most 0.9 µm after Comparative Example X-1, in a volume-based particle size distribution of the carbon black, the median diameter (D50) was at least 0.5 µm and at most 0.8 µm, the difference (D90 - D10) between the cumulative 90% diameter (D90) and the cumulative 10% diameter (D10) was less than 2 µm, the total amount of particles with a particle diameter larger than 5 µm was less than 1%, the ratio (D50'/D50) of the median diameter (D50') of the carbon black when the slurry was placed at rest for 4 weeks to D50 was less than 1.3, and the cycling properties improved.

Additionally, in Comparative Examples X-4, Y-1, Z-1, and Z-4, in a volume-based particle size distribution of the carbon black in the slurry, the median diameter (D50) was at least 0.5 µm and at most 0.8 µm, and the ratio (D50'/D50) of the median diameter (D50') of the carbon black when the slurry was placed at rest for 4 weeks to D50 was less than 1.3. However, the difference (D90 - D10) between the cumulative 90% diameter (D90) and the cumulative 10% diameter (D10) was 2 µm or more, and the total amount of particles with a particle diameter larger than 5 µm was 1% or more. In contrast therewith, in Examples A-2, B-1, C-1, and C-2, by performing a further dispersion treatment for a time period that is 0.5 to 2.5 times the dispersion time until D50 became at least 0.5 µm and at most 0.9 µm after Comparative Examples X-4, Y-1, Z-1, or Z-4 respectively, the difference (D90 - D10) between the cumulative 90% diameter (D90) and the cumulative 10% diameter (D10) was less than 2 µm, the total amount of particles with a particle diameter larger than 5 µm was less than 1%, and the cycling properties improved.

Additionally, as described in Table 2, in Comparative Example Y-4, in a volume-based particle size distribution of the carbon black in the slurry, the difference (D90 - D10) between the cumulative 90% diameter (D90) and the cumulative 10% diameter (D10) was less than 2 µm, the total amount of particles with a particle diameter larger than 5 µm was less than 1%, and the ratio (D50'/D50) of the median diameter (D50') of the carbon black when the slurry was placed at rest for 4 weeks to D50 was less than 1.3. However, the median diameter (D50) was larger than 0.8 µm. In contrast therewith, in Example B-2, by performing a further dispersion treatment for a time period that was 0.5 to 2.5 times the dispersion time until D50 became at least 0.5 µm and at most 0.9 µm after Comparative Example Y-4, the median diameter (D50) was controlled to be at least 0.5 µm and at most 0.8 µm, and the cycling properties improved.

## Claims

1. A slurry containing carbon black, a dispersant, and a dispersion medium, wherein:
in a volume-based particle size distribution of the carbon black, a median diameter (D50) is at least 0.5 µm and at most 0.8 µm, a difference (D90 - D10) between a cumulative 90% diameter (D90) and a cumulative 10% diameter (D10) is less than 2 µm, and a total amount of particles having a particle diameter larger than 5 µm is less than 1%; and
a ratio (D50'/D50) of a median diameter (D50') of the carbon black when the slurry has been placed at rest for 4 weeks to D50 is less than 1.3.

2. The slurry according to claim 1, wherein the carbon black is acetylene black.

3. The slurry according to claim 1, wherein an average primary particle diameter of the carbon black is at least 17 nm and at most 30 nm.

4. The slurry according to claim 1, wherein the median diameter (D50') is at least 0.5 µm and at most 0.8 µm.

5. The slurry according to claim 1, wherein, in a volume-based particle size distribution of the carbon black when the slurry has been placed at rest for 4 weeks, a difference (D90' - D10') between a cumulative 90% diameter (D90') and a cumulative 10% diameter (D10') is less than 2 µm.

6. A positive electrode composition that is a mixture of the slurry according to any one of claims 1 to 5, an active material, and a binding material.

7. A battery provided with a positive electrode including a current collector and a mixed material layer, wherein
the mixed material layer contains a solid component of the positive electrode composition according to claim 6.

8. A slurry production method including:
a mixing step of mixing a carbon black powder, a dispersant, and a dispersion medium to obtain a first slurry; and
a dispersion step of performing a dispersion treatment on the first slurry to obtain a second slurry containing carbon black, the dispersant, and the dispersion medium;
wherein
the dispersion step is a step of performing the dispersion treatment so that
in a volume-based particle size distribution of the carbon black in the second slurry, a median diameter (D50) is at least 0.5 µm and at most 0.8 µm, a difference (D90 - D10) between a cumulative 90% diameter (D90) and a cumulative 10% diameter (D10) is less than 2 µm, and a total amount of particles having a particle diameter larger than 5 µm is less than 1%; and
a ratio (D50'/D50) of the median diameter (D50') of the carbon black when the second slurry has been placed at rest for 4 weeks to D50 is less than 1.3.

9. The production method according to claim 8, wherein the carbon black is acetylene black.

10. The production method according to claim 8 or 9, wherein a BET specific surface area of the carbon black powder is at least 100 m²/g and at most 400 m²/g.

11. The production method according to claim 8 or 9, wherein an average primary particle diameter of the carbon black is at least 17 nm and at most 30 nm.

12. The production method according to claim 8 or 9, wherein the dispersion step is a step of further performing the dispersion treatment after the median diameter (D50) has become at least 0.5 µm and at most 0.9 µm in the volume-based particle size distribution of the carbon black in the slurry.

13. The production method according to claim 8 or 9, wherein the dispersion step is a step, after the median diameter (D50) has become at least 0.5 µm and at most 0.9 µm in the volume-based particle size distribution of the carbon black in the slurry, of further performing the dispersion treatment for a time period that is 0.5 to 2.5 times a dispersion time until the median diameter (D50) became at least 0.5 µm and at most 0.9 µm.
